# EUROPEAN PATENT SPECIFICATION

(11) **EP 4 123 198 B1**
(45) Date of publication and mention of the grant of the patent: **31.12.2025**
(21) Application number: 22185604.0
(22) Date of filing: 19.07.2022
(51) Int. Cl.: F16H 45/02

(54) **TORQUE CONVERTER FOR VEHICLE**
DREHMOMENTWANDLER FÜR FAHRZEUGE
CONVERTISSEUR DE COUPLE POUR VÉHICULE

(30) Priority: 21.07.2021 KR 20210095526
(43) Date of publication of application: 25.01.2023
(73) Proprietor: Valeo Kapec Co., Ltd., Daegu 42709 (KR)
(72) Inventor: KANG, Juseok, Daegu 42709 (KR)
(74) Representative: Isarpatent

(56) References cited:
- DE-T5- 112015 003 958
- KR-A- 20190 142 087
- US-A1- 2016 258 521

## Description

### TECHNICAL FIELD

The present invention relates to a torque converter for a vehicle, and more particularly, to a torque converter for a vehicle that improves vibration insulation performance by increasing an antiresonance damping effect.

### BACKGROUND ART

In general, a torque converter is installed between an engine and a transmission of a vehicle and serves to transmit driving power of the engine to the transmission by using a fluid. The torque converter includes an impeller configured to rotate by receiving the driving power of the engine, a turbine configured to be rotated by oil discharged from the impeller, and a reactor (also called a 'stator') configured to increase a torque change rate by directing a flow of oil, which returns to the impeller, in a rotation direction of the impeller.

Because power transmission efficiency may deteriorate when a load applied to the engine increases, the torque converter is equipped with a lock-up clutch (also called 'damper clutch') that is a means for directly connecting the engine and the transmission. The lock-up clutch may be disposed between the turbine and a front cover connected directly to the engine and serve to transmit rotational power of the engine directly to the turbine.

The lock-up clutch includes a piston that may move in an axial direction. Further, a friction member is coupled to the piston and in friction contact with the front cover. In addition, a torsional damper may be coupled to the torque converter and absorb impact and vibration applied in a rotation direction of a shaft when the friction member is coupled to the front cover.

However, in the case of the torque converter in the related art described above, because vibration is severely generated when the lock-up clutch operates in a low rotational speed region of the engine, the lock-up clutch operates in a high rotational speed region in which a rotational speed of the engine is a predetermined rotational speed or higher. For this reason, there is a problem in that the fuel economy of a vehicle significantly deteriorates.

In addition, in the torque converter in the related art, resonance occurs when a frequency of the rotational power of the engine inputted to the front cover is coincident with a natural frequency of the torque converter.

For this reason, an amplitude of the frequency of the driving power inputted to an input shaft of the transmission through the torque converter may also increase. When the amplitude of the frequency of the driving power inputted to the input shaft of the transmission increases as described above, there may occur a problem in that NVH (noise, vibration, and harshness) performance of the vehicle deteriorates, the fuel economy deteriorates, and power transmission performance of the torque converter deteriorates.

US 2016/258521 A1 provides a torque converter having a dynamic damper to obtain a stably high damping performance over the entire range of the engine speed range with a simple structure. KR 2019 0142087 A provides a torque converter for a vehicle to improve vibration isolation properties. DE 11 2015 003958 T5 provides a hydraulic power transmission device with a hydraulic damper, with a simple configuration, a high damping performance.

### SUMMARY OF THE INVENTION

The present invention has been made in an effort to solve the above-mentioned problems, and an object of the present invention is to provide a torque converter for a vehicle, in which a turbine assembly is used as a mass body of an antiresonance damper assembly, and an inertia plate is additionally applied to increase overall inertia of the antiresonance damper assembly, thereby increasing an antiresonance damping effect and improving vibration insulation performance.

To achieve the above-mentioned object, according to the present invention, a torque converter for a vehicle is provided, as defined by independent claim 1. The torque converter includes: a front cover; an impeller coupled to the front cover and configured to rotate together with the front cover; a turbine assembly disposed at a position facing the impeller; a torsional damper assembly; a lock-up clutch configured to selectively and directly connect the front cover and the torsional damper assembly; and a spline hub connected to the torsional damper assembly and configured to transmit driving power, which is transmitted to the torsional damper assembly, to a transmission, in which an antiresonance damper assembly configured to absorb vibration and impact by using inertia of a mass body is coupled to the torsional damper assembly and the turbine assembly. The turbine assembly is coupled to a turbine hub relatively rotatably connected to the spline hub, and the antiresonance damper assembly is connected to the turbine assembly through the turbine hub in order to use the turbine assembly as the mass body.

In the present invention, the antiresonance damper assembly is disposed between the turbine assembly and the torsional damper assembly.

In the present invention, the antiresonance damper assembly includes an antiresonance damper plate, and the antiresonance damper plate is coupled to the torsional damper assembly.

In the present invention, the antiresonance damper assembly further includes: a first inertia ring disposed at a side of the turbine assembly, provided outside the antiresonance damper plate in a radial direction, and configured to be rotatable relative to the antiresonance damper plate; a second inertia ring disposed at a side of the torsional damper assembly, provided outside the antiresonance damper plate in the radial direction, and integrally and rotatably coupled to the first inertia ring so as to be rotatable relative to the antiresonance damper plate; and one or more elastic members provided in a circumferential direction on an outer peripheral surface of the antiresonance damper plate and disposed in the first and second inertia rings integrally and rotatably coupled to each other.

In the present invention, the first inertia ring includes a coupling portion extending inward in the radial direction so as to be fixebly coupled to the turbine assembly.

In the present invention, the torque converter may further include: a turbine hub integrally and rotatably coupled to the turbine assembly and relatively rotatably connected to the spline hub, in which the first inertia ring includes a coupling portion extending inward in the radial direction so as to be fixedly coupled to one of or both the turbine assembly and the turbine hub.

In another embodiment of the present invention, the turbine assembly may include a turbine plate having an inner peripheral surface fixedly coupled to the turbine hub.

In the present invention the turbine assembly may include a turbine plate having an inner peripheral surface fixedly coupled to the turbine hub, and the inner peripheral surface of the turbine plate may be fixedly coupled to the coupling portion.

In the present invention, one or more first seating grooves may be formed in one surface of the first inertia ring so as to correspond to the one or more elastic members.

In the present invention, one or more second seating grooves may be formed in one surface of the second inertia ring so as to correspond to the one or more elastic members.

In the present invention, the antiresonance damper assembly may include one or more coupling pins configured to allow the first inertia ring and the second inertia ring to be integrally and rotatably coupled to each other in an axial direction with the antiresonance damper plate interposed therebetween.

In the present invention, the one or more coupling pins and the one or more elastic members may be alternately disposed in the circumferential direction, such that the first inertia ring and the second inertia ring are integrally and rotatably coupled to each other.

In the present invention, the antiresonance damper assembly may include one or more inertia plates integrally and rotatably coupled to the first and second inertia rings by means of the one or more coupling pins, the inertia plates and the one or more elastic members may be alternately disposed in the circumferential direction, and the inertia plates may be disposed between the first and second inertia plates in the axial direction.

In the present invention, the antiresonance damper plate may further include: one or more first through-holes formed along a circumference of an outer peripheral surface thereof while corresponding to the one or more elastic members; and one or more second through-holes formed along the circumference of the outer peripheral surface thereof while corresponding to the one or more inertia plates.

In another embodiment of the present invention, the torsional damper assembly may include: a drive plate integrally and rotatably coupled to the lock-up clutch; a driven plate integrally and rotatably coupled to the spline hub; and an elastic structure disposed to elastically transmit driving power of the drive plate to the driven plate.

In another embodiment of the present invention, the antiresonance damper plate may be integrally and rotatably coupled to the driven plate.

In another embodiment of the present invention, the torsional damper assembly may further include a cover plate integrally and rotatably coupled to the drive plate, and the antiresonance damper plate may be integrally and rotatably coupled to the cover plate.

In another embodiment of the present invention, the elastic structure may include: one or more first springs configured to receive driving power from the drive plate; one or more second springs configured to transmit the driving power to the driven plate; and an intermediate plate disposed to receive the driving power from the one or more first springs and transmit the driving power to the one or more second springs.

In another embodiment of the present invention, the antiresonance damper plate may be integrally and rotatably coupled to the driven plate.

In another embodiment of the present invention, the torsional damper assembly may further include a cover plate integrally and rotatably coupled to the drive plate, and the antiresonance damper plate may be integrally and rotatably coupled to the cover plate.

In another embodiment of the present invention, the antiresonance damper plate may be integrally and rotatably coupled to the intermediate plate.

In another embodiment of the present invention, one or more mounting portions may be formed in an inner peripheral surface of the antiresonance damper plate so that the antiresonance damper plate is coupled to the torsional damper assembly.

In the present invention, the torque converter may further include a turbine hub integrally and rotatably coupled to the turbine assembly and relatively rotatably connected to the spline hub.

According to the torque converter for a vehicle according to the embodiment of the present invention described above, the single antiresonance damper assembly is applied, the turbine assembly is used as the mass body of the antiresonance damper assembly, and the inertia plate is additionally applied to increase the overall inertia of the antiresonance damper assembly, thereby increasing the antiresonance damping effect and improving the vibration insulation performance.

In addition, according to the present invention, the antiresonance damper assembly is made compact without increasing the lengths in the axial direction and the radial direction of the torque converter, thereby optimizing the usage space.

In addition, according to the present invention, the turbine assembly is connected to the antiresonance damper assembly and used as the mass body, thereby improving the vibration insulation efficiency and the overall marketability of the torque converter.

In addition, according to the present invention, the damping effect of the antiresonance damper assembly is increased, thereby improving the overall NVH performance of the vehicle and the power transmission performance of the torque converter.

### BRIEF DESCRIPTION OF THE DRAWINGS

FIG. 1 is a cross-sectional view made by cutting a torque converter for a vehicle according to an embodiment of the present invention in an axial direction.
FIG. 2 is a perspective view illustrating a state in which a turbine assembly, a torsional damper assembly, and an antiresonance damper assembly, which are applied to the torque converter for a vehicle according to the embodiment of the present invention, are coupled.
FIG. 3 is a cross-sectional view taken along line X-X in FIG. 2.
FIG. 4 is an enlarged view of part B in FIG. 3.
FIG. 5 is an enlarged view of part C in FIG. 3.
FIG. 6 is a perspective view of the antiresonance damper assembly applied to the torque converter for a vehicle according to the embodiment of the present invention.
FIG. 7 is a cross-sectional view taken along line Y-Y in FIG. 6.
FIG. 8 is an exploded perspective view of the antiresonance damper assembly applied to the torque converter for a vehicle according to the embodiment of the present invention.
FIG. 9 is a perspective view of an antiresonance damper plate applied to the antiresonance damper assembly of the torque converter for a vehicle according to the embodiment of the present invention.
FIG. 10 is a perspective view of a first inertia ring applied to the antiresonance damper assembly of the torque converter for a vehicle according to the embodiment of the present invention.

### DETAILED DESCRIPTION

Hereinafter, exemplary embodiments of the present disclosure will be described in detail with reference to the accompanying drawings.

The present disclosure is not limited to the embodiments disclosed herein, but will be variously changed and implemented in various different forms. The embodiments are provided so that the present disclosure will be thorough and complete, and also to provide a more complete understanding of the scope of the present disclosure to those of ordinary skill in the art.

Therefore, it should be understood that the present disclosure is not limited to the embodiments disclosed below, but the configuration of any one embodiment and the configuration of another embodiment can be substituted or added, and the present disclosure includes all alterations, equivalents, and alternatives that are included in the technical spirit and scope of the present disclosure.

In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure.

A part irrelevant to the description will be omitted to clearly describe the present disclosure, and the same or similar constituent elements will be designated by the same reference numerals throughout the specification.

The size and thickness of each component illustrated in the drawings are arbitrarily shown for ease of description, but the present disclosure is not necessarily limited thereto. In order to clearly describe several portions and regions, thicknesses thereof are enlarged.

In the drawings, sizes or thicknesses of constituent elements may be exaggerated, increased, or decreased for convenience of understanding, but the protection scope of the present disclosure should not be restrictively construed.

The terms used in the present specification are used only for the purpose of describing particular examples or embodiments and are not intended to limit the present disclosure. Further, singular expressions include plural expressions unless clearly described as different meanings in the context.

In the present application, the terms "comprises," "comprising," "includes," "including," "containing," "has," "having", and other variations thereof are inclusive and therefore specify the presence of features, integers, steps, operations, elements, components, and/or combinations thereof disclosed in the specification. That is, in the present application, the terms "comprises," "comprising," "includes," "including," "containing," "has," "having", and other variations thereof need to be understood as not precluding the presence or addition of one or more other features, integers, steps, operations, elements, components, and/or combinations thereof.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements.

When one constituent element is described as being "coupled directly to" or "connected directly to" another constituent element, it should be understood that no intervening constituent element is present between the constituent elements.

When one constituent element is described as being "disposed above" or "disposed below" another constituent element, it should be understood that one constituent element can be disposed directly on another constituent element, and an intervening constituent element can also be present between the constituent elements.

Unless otherwise defined, all terms used herein, including technical or scientific terms, have the same meaning as commonly understood by those skilled in the art to which the present disclosure pertains.

The terms such as those defined in a commonly used dictionary should be interpreted as having meanings consistent with meanings in the context of related technologies and should not be interpreted as ideal or excessively formal meanings unless explicitly defined in the present application.

For the convenience, the directions in the specification are defined as follows.

A forward/rearward direction or an axial direction is defined as a direction parallel to a rotation axis. A front (forward) means any one direction of a power source, e.g., a direction toward an engine. A rear (rearward) means the other direction, e.g., a direction toward a transmission. Therefore, a front surface means a surface facing forward, and a rear surface means a surface facing rearward.

A radial direction means a direction toward or away from a center of the rotation axis along a straight line passing through the center of the rotation axis on the plane perpendicular to the rotation axis. A direction radially away from the center is referred to as a centrifugal direction, and a direction toward the center is referred to as a centripetal direction.

A circumferential direction means a direction surrounding a circumference of the rotation axis. An outer periphery means an outer circumference, and an inner periphery means an inner circumference. Therefore, an outer peripheral surface is a surface facing away from the rotation axis, and an inner peripheral surface is a surface facing the rotation axis.

A circumferential surface means a surface, a normal line of which is directed in an approximately circumferential direction.

In addition, the term "unit", "means", "part", "member", or the like, which is described in the specification, means a unit of a comprehensive configuration that performs at least one function or operation.

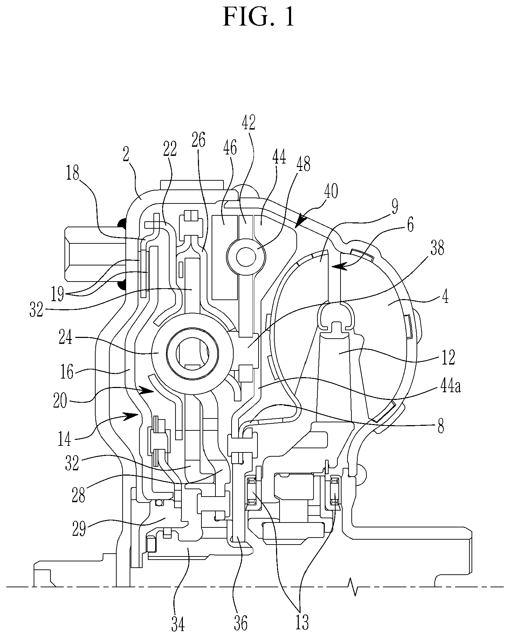

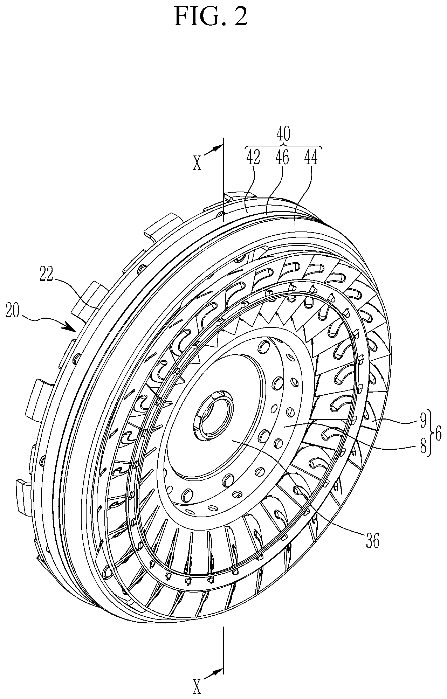

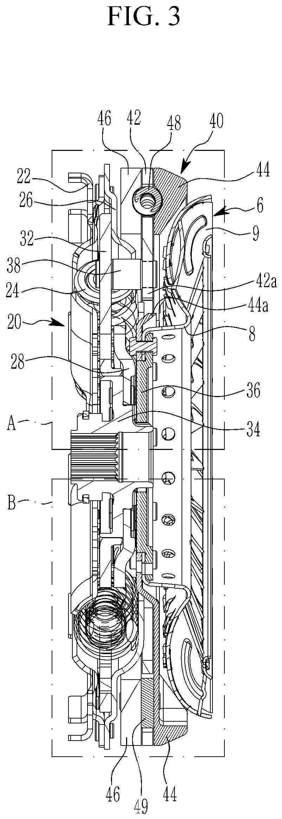

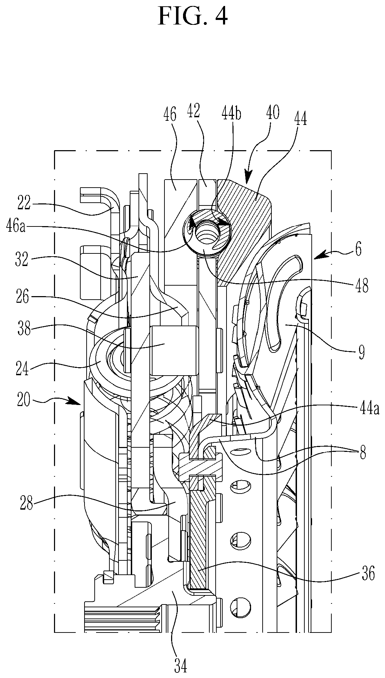

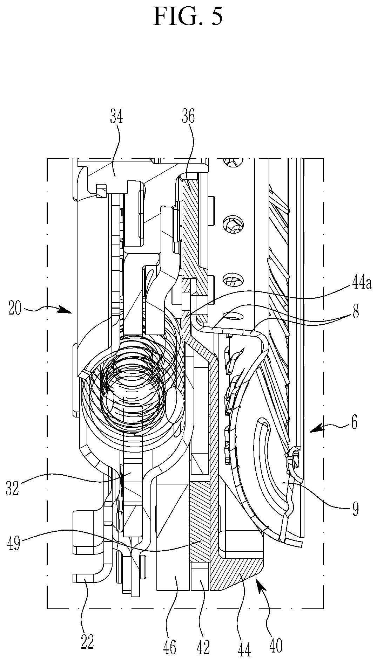

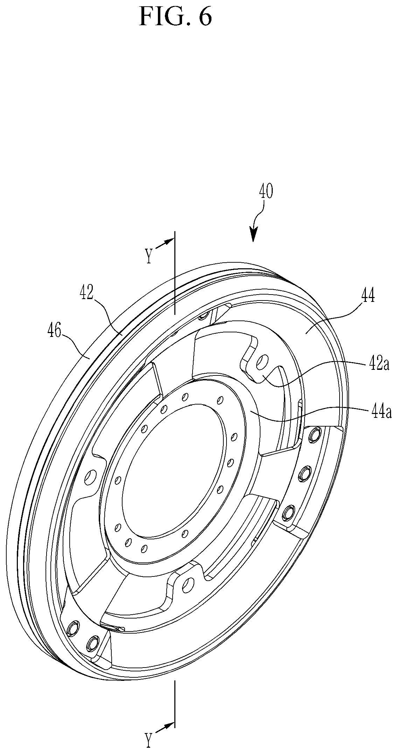

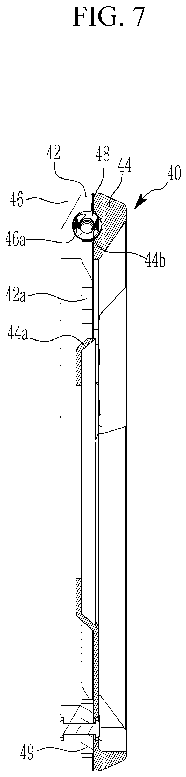

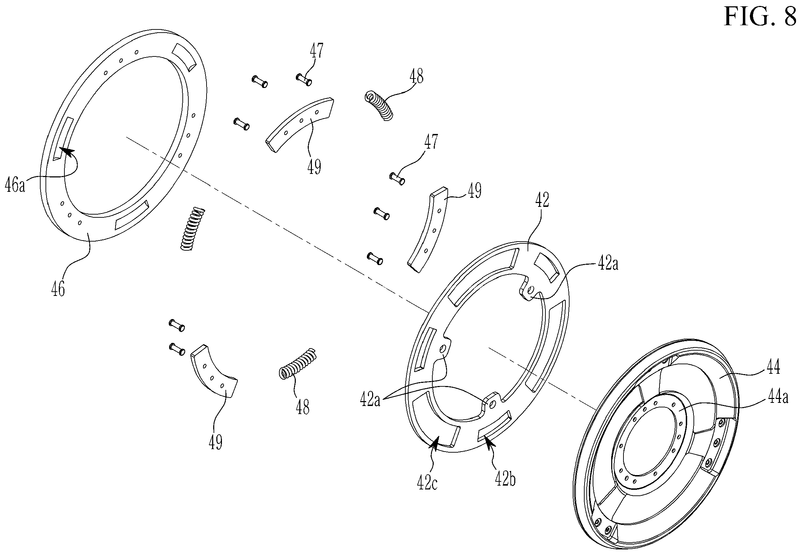

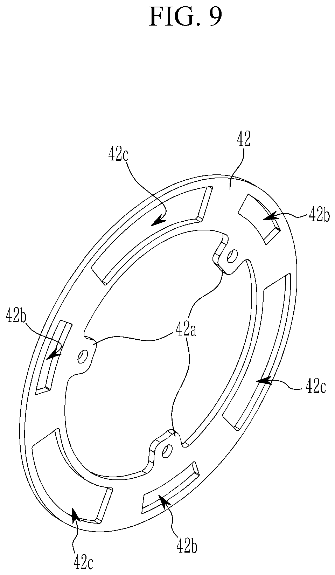

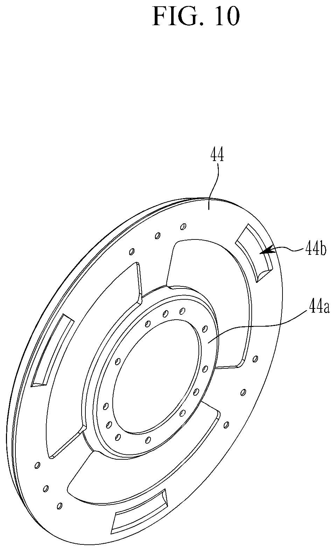

FIG. 1 is a cross-sectional view made by cutting a torque converter for a vehicle according to an embodiment of the present disclosure in an axial direction, FIG. 2 is a perspective view illustrating a state in which a turbine assembly, a torsional damper assembly, and an antiresonance damper assembly, which are applied to the torque converter for a vehicle according to the embodiment of the present disclosure, are coupled, FIG. 3 is a cross-sectional view taken along line X-X in FIG. 2, FIG. 4 is an enlarged view of part B in FIG. 3, FIG. 5 is an enlarged view of part C in FIG. 3, FIG. 6 is a perspective view of the antiresonance damper assembly applied to the torque converter for a vehicle according to the embodiment of the present disclosure, FIG. 7 is a cross-sectional view taken along line Y-Y in FIG. 6, FIG. 8 is an exploded perspective view of the antiresonance damper assembly applied to the torque converter for a vehicle according to the embodiment of the present disclosure, FIG. 9 is a perspective view of an antiresonance damper plate applied to the antiresonance damper assembly of the torque converter for a vehicle according to the embodiment of the present disclosure, and FIG. 10 is a perspective view of a first inertia ring applied to the antiresonance damper assembly of the torque converter for a vehicle according to the embodiment of the present disclosure.

Referring to FIG. 1, a torque converter for a vehicle according to an embodiment of the present disclosure includes: a front cover 2 connected to a crank shaft of an engine and configured to rotate; an impeller 4 connected to the front cover 2 and configured to rotate together with the front cover 2; a turbine assembly 6 disposed at a position facing the impeller 4; and a reactor 12 (or also called a 'stator') positioned between the impeller 4 and the turbine assembly 6 and configured to change a flow of oil discharged from the turbine assembly 6 and transmit the oil to the impeller 4.

In this case, the reactor 12 configured to transmit the oil to the impeller 4 has the same rotation center as the front cover 2.

In addition, thrust needle bearings 13 may be respectively provided between the impeller 4 and the reactor 12 and between the turbine assembly 6 and the reactor 12.

The thrust needle bearings 13 may stably support the rotation of the turbine assembly 6 and the rotation of the impeller 4 rotating together with the front cover 2.

Further, the torque converter according to the embodiment of the present disclosure includes a lock-up clutch 14 as a means that directly connect the engine and the transmission. Specifically, the driving power of the engine is transmitted to the front cover 2. The lock-up clutch 14 may be selectively connected directly to the front cover 2 and transmit the driving power of the engine to the transmission.

The lock-up clutch 14 may be disposed between the front cover 2 and the turbine assembly 6.

The lock-up clutch 14 may include a piston 16 having an approximately circular plate shape and configured to move in the axial direction. The piston 16 may be disposed such that an inner peripheral surface thereof is slidable in the axial direction on an outer peripheral surface of a piston hub 29 provided on the front cover 2.

Further, a torsional damper assembly 20 may be coupled to the lock-up clutch 14.

The torsional damper assembly 20 serves to transmit the driving power, which is transmitted through the lock-up clutch 14, to a spline hub 34 to be described below. In this process, torsional damper assembly 20 serves to absorb a torsional force applied in a rotation direction of a shaft and attenuate vibration.

Meanwhile, the lock-up clutch 14 may include a friction plate 18 disposed between the front cover 2 and the piston 16. Friction members 19 may be connected to two opposite surfaces of the friction plate 18.

Therefore, when the piston 16 is moved in a direction toward the front cover 2 by supplied hydraulic pressure, the friction members 19 come into close contact with the front cover 2 and the piston 16, such that the lock-up clutch 14 may receive, through the friction plate 18, the driving power transmitted to the front cover 2.

In the embodiment, the friction plate 18 may engage with a drive plate 22. In this case, when the piston 16 performs a lock-up operation, the driving power of the front cover 2 may be transmitted to the drive plate 22 through the lock-up clutch 14.

In the present embodiment, as illustrated in FIGS. 1 to 5, the torsional damper assembly 20 may include the drive plate 22, one or more first springs 24, one or more second springs, a cover plate 26, a driven plate 28, and an intermediate plate 32.

First, the drive plate 22 may engage with the friction plate 18 included in the lock-up clutch 14 and receive the driving power of the friction plate 18.

The plurality of first springs 24 are disposed at equal intervals in the rotation direction of the torsional damper assembly 20 based on the rotation center and elastically supported by the drive plate 22 and the intermediate plate 32. In the embodiment, the first spring 24 may be configured as a compression coil spring.

The second springs (not illustrated) and the first springs 24 may be alternately disposed in the rotation direction (circumferential direction). The second spring is elastically supported by the intermediate plate 32 and the driven plate 28. In the embodiment, the second spring may be configured as a compression coil spring.

The cover plate 26, together with the drive plate 22, may be disposed to surround the first spring 24 and elastically support the first spring 24.

In this case, the drive plate 22 and the cover plate 26 may be disposed to face each other.

That is, the drive plate 22 may be coupled to the cover plate 26 so that the drive plate 22 and the cover plate 26 integrally rotate. The driving power of the drive plate 22 and the cover plate 26 may be transmitted to the intermediate plate 32 through the first spring 24.

The driving power transmitted to the intermediate plate 32 may be transmitted to the driven plate 28 through the second springs (not illustrated) alternately disposed together with the first spring 24 in the circumferential direction. In this process, the first spring 24 and the second spring may absorb vibration and impact in the rotation direction.

The driven plate 28 is elastically supported by the second spring and receives the driving power. The driven plate 28 may be fixedly coupled to the spline hub 34 by various coupling methods such as welding, bolting, or riveting, for example.

Because the spline hub 34 is integrally and rotatably connected to the driven plate 28, the spline hub 34 transmits the driving power, which is transmitted to the torsional damper assembly 20, to the transmission.

Further, the intermediate plate 32 may be relatively rotatably connected to the spline hub 34.

An antiresonance damper assembly 40 to be described below may be connected to the intermediate plate 32.

The torsional damper assembly 22 configured as described above is disposed at the side of the front cover 2 in a direction opposite to the turbine assembly 6.

In the present embodiment described above, the torsional damper assembly 22 having the two types of springs (the first spring and the second spring) connected in series through the intermediate plate 32 in the circumferential direction has been described. However, the present disclosure need not be necessarily limited thereto. For example, instead of the configuration in which the first springs and the second springs are alternately disposed in the circumferential direction and the same radial direction, the first springs and the second springs may be disposed at positions in different radial directions and the same circumferential direction and connected in series by the intermediate plate.

Further, instead of the torsional damper assembly necessarily having the two types of springs, a torsional damper assembly having a single type of spring may also be implemented. In this case, the intermediate plate may be eliminated, and the driving power may be sequentially transmitted to the drive plate, the spring, and the driven plate.

Meanwhile, in the present embodiment, as illustrated in FIGS. 1, 3, and 4, the turbine assembly 6 is coupled to a turbine hub 36 relatively rotatably connected to the spline hub 34.

The turbine assembly 6 may include a turbine plate 8 having an inner peripheral surface coupled to the turbine hub 36, and a plurality of turbine blades 9 mounted on the turbine plate 8 and disposed at positions spaced apart from one another at equal intervals in the circumferential direction.

Further, as illustrated in FIGS. 1 to 5, the antiresonance damper assembly 40 is coupled to the torsional damper assembly 20 and absorb vibration and impact by using inertia of a mass body.

The antiresonance damper assembly 40 may insulate vibration by offsetting input oscillation by using the natural frequencies of the mass body and an elastic member.

Specifically, the antiresonance damper assembly 40 attenuates vibration by applying an opposite phase of torque with a large amplitude by using the elastic member and the inertia of the mass body.

The antiresonance damper assembly 40 is connected to the turbine assembly 6 through the turbine hub 36 in order to use the turbine assembly 6 as the mass body.

In the present embodiment, as illustrated in FIGS. 6 to 8, the antiresonance damper assembly 40 includes an antiresonance damper plate 42, a first inertia ring 44, a second inertia ring 46, and elastic members 48.

First, the antiresonance damper plate 42 is disposed between the turbine assembly 6 and the torsional damper assembly 20 and coupled to the torsional damper assembly 20.

In this case, one or more mounting portions 42a may be formed on an inner peripheral surface of the antiresonance damper plate 42 so that the antiresonance damper plate 42 is coupled to the torsional damper assembly 20.

The one or more mounting portions 42a are disposed on the inner peripheral surface of the antiresonance damper plate 42 and provided at positions spaced apart from one another at a predetermined angle in the circumferential direction. In the present embodiment, three mounting portions 42a may be formed to be spaced apart from one another at an angle of 120° along a circumference of the inner peripheral surface of the antiresonance damper plate 42.

Meanwhile, in the present embodiment, one embodiment has been described in which the three mounting portions 42a are spaced apart from one another at an angle of 120°. However, the present disclosure is not limited thereto. The number of mounting portions 42a and the positions of the mounting portions 42a may be changed and applied.

That is, the antiresonance damper plate 42 may be fixedly coupled to the intermediate plate 32 by means of the mounting portion 42a. In another embodiment, the antiresonance damper plate 42 may be fixedly coupled to the driven plate 28 instead of the intermediate plate 32.

In still another embodiment, the antiresonance damper plate 42 may be fixedly coupled to the drive plate 22 and/or the cover plate 26 instead of the intermediate plate 32.

In the present embodiment, the mounting portions 42a of the antiresonance damper plate 42 may be coupled to the intermediate plate 32 by means of connection pins 38.

In the present embodiment, the first inertia ring 44 acts as a mass body and is disposed at the side of the turbine assembly 6 and provided outside the antiresonance damper plate 42 in the radial direction. The first inertia ring 44 is provided to be rotatable by a preset angle relative to the antiresonance damper plate 42.

The second inertia ring 46, together with the first inertia ring 44, acts as a mass body and is disposed at the side of the torsional damper assembly 20 and provided outside the antiresonance damper plate 42 in the radial direction.

The second inertia ring 46 may be coupled to the first inertia ring 44 so as to be rotatable relative to the antiresonance damper plate 42 by a preset angle.

Further, the elastic member 48 is provided in the circumferential direction on the outer peripheral surface of the antiresonance damper plate 42 and disposed in the first and second inertia rings 44 and 46 coupled to each other. The elastic member 48 may be configured as a compression coil spring.

In the present embodiment, the elastic members 48 may be respectively disposed at positions spaced apart from one another at an angle of 120° in the circumferential direction of the antiresonance damper plate 42.

In this case, first seating grooves 44b may be formed in portions on one surface of the first inertia ring 44 that respectively correspond to the elastic members 48 (see FIG. 10).

In addition, second seating grooves 46a may be formed in portions of a surface of the second inertia ring 46 that respectively correspond to the elastic members 48.

A part of an outer portion of each of the elastic members 48, which are disposed at equal intervals in the circumferential direction, is inserted into the first and second seating grooves 44b and 46a.

Meanwhile, the first inertia ring 44 and the second inertia ring 46 are coupled to each other by means of coupling pins 47 with the antiresonance damper plate 42 interposed therebetween.

The coupling pins 47 may be disposed between the elastic members 48 in the circumferential direction and couple the first and second inertia rings 44 and 46 so that the first and second inertia rings 44 and 46 are rotatable relative to the antiresonance damper plate 42.

When the antiresonance damper assembly 40 configured as described above rotates together with the torsional damper assembly 20, the first and second inertia rings 44 and 46 rotate relative to the antiresonance damper plate 42 by the amount by which the elastic member 48 is compressed or decompressed, thereby attenuating vibration and impact.

In this case, the antiresonance damper assembly 40 may further include one or more inertia plates 49 disposed between the elastic members 48 in the circumferential direction and coupled, by means of the coupling pins 47, to the first and second inertia rings 44 and 46 that face each other.

The inertia plate 49, together with the first and second inertia rings 44 and 46, acts as a mass body of the antiresonance damper assembly 40. The inertia plates 49 may be disposed at positions spaced apart from one another at a preset angle in the circumferential direction of the antiresonance damper assembly 40.

Meanwhile, the antiresonance damper plate 42 may further include first through-holes 42b formed along a circumference of an outer peripheral surface thereof while corresponding to the elastic members 48, and second through-holes 42c formed along the circumference of the outer peripheral surface thereof while corresponding to the inertia plates 49 (see FIG. 9).

Therefore, when the first and second inertia rings 44 and 46 rotate in the state in which the elastic members 48 are inserted into the first and second seating grooves 44b and 46a, the elastic members 48 may be compressed in the rotation direction by the inner circumferential surfaces of the first through-holes 42b disposed at two opposite ends of the elastic member 48.

In this case, the inertia plates 49 are disposed to rotate integrally with the first and second inertia rings 44 and 46 by means of the coupling pins 47 and disposed in the second through-holes 42c. Therefore, the amount by which the elastic member 48 is compressed may be restricted as the two opposite ends of the inertia plate 49 based on the circumferential direction are brought into contact with the two opposite ends of the second through-hole 42c based on the circumferential direction by the first and second inertia rings 44 and 46 that rotate relative to the antiresonance damper plate 42. Therefore, it is possible to reduce a degree of fatigue of the elastic member 48 and improve the durability of the elastic member 48.

That is, the antiresonance damper assembly 40 may attenuate vibration and impact, which are generated when the lock-up clutch 14 operates, by using the natural frequencies of the first and second inertia rings 44 and 46 acting as mass bodies, the natural frequencies of the inertia plates 49, and the natural frequencies of the elastic members 48 acting as elastic bodies.

Meanwhile, the first inertia ring 44 includes a coupling portion 44a extending inward in the radial direction and coupled to the turbine hub 36.

In addition, an inner peripheral surface of the turbine plate 8 may be fixedly coupled to the coupling portion 44a and the outer peripheral surface of the turbine hub 36 by various coupling methods such as welding, bolting, or riveting, for example.

Therefore, the turbine assembly 6 and the turbine hub 36 are connected to the antiresonance damper assembly 40 through the coupling portion 44a of the first inertia ring 44 and absorb vibration and impact in the rotation direction by using the elastic members 48.

That is, the turbine assembly 6 and the turbine hub 36 may act as additional mass bodies of the antiresonance damper assembly 40, thereby increasing the antiresonance damping effect of the antiresonance damper assembly 40.

Therefore, the antiresonance damper assembly 40 may more efficiently attenuate and absorb vibration and impact in the rotation direction that are inputted through the torsional damper assembly 20.

Meanwhile, the movements of the turbine assembly 6 and the antiresonance damper assembly 40 in the axial direction and the radial direction may be restricted by the turbine hub 36.

That is, the turbine hub 36 may be relatively rotatably connected to the spline hub 34, such that the movement of the turbine hub 36 in the axial direction may be restricted. Therefore, the antiresonance damper assembly 40 may easily operate, and the vibration insulation performance may be improved by the increase in damping effect.

In the torque converter configured as described above, when the lock-up clutch 14 does not operate, the driving power of the engine is transmitted to the transmission through the front cover 2, the impeller 4, the turbine assembly 6, the antiresonance damper assembly 40, the torsional damper assembly 20, the driven plate 28, and the spline hub 34. In this process, the elastic member 48, the first spring 24, and the second spring may absorb vibration and impact in the rotation direction.

In contrast, when the lock-up clutch 14 operates, the piston 16 is moved toward the front cover 2 by hydraulic pressure.

Then, the friction members 18 come into close contact with the inner side of the front cover 2 and one side of the piston 16, such that the driving power of the front cover 2 is transmitted to the torsional damper assembly 20 through the piston 16.

The drive plate 22, together with the cover plate 26, transmits the driving power to the intermediate plate 32 and the antiresonance damper plate 42 while compressing the first spring 24.

In this case, the impact and vibration, which are applied in the rotation direction when the lock-up clutch 14 operates, are primarily reduced by the first springs 24 and the second springs provided in the torsional damper assembly 22.

The antiresonance damper assembly 40 rotates together with the torsional damper assembly 20 and additionally reduces the impact and vibration, which are transmitted from the intermediate plate 32 of the torsional damper assembly 20 through the antiresonance damper plate 42, by using the natural frequencies of the turbine assembly 6, the turbine hub 36, the first and second inertia rings 44 and 46, the inertia plate 49, and the elastic member 48.

Therefore, in the state in which impact and vibration in the rotation direction are attenuated by the above-mentioned processes, the driving power is transmitted to the driven plate 28, and the driving power transmitted to the driven plate 28 is transmitted to the transmission through the spline hub 34.

That is, the vibration and impact in the rotation direction may be reduced sequentially by the torsional damper assembly 20 and the antiresonance damper assembly 40 when the lock-up clutch 14 operates.

In this case, the torsional damper assembly 20 may primarily absorb impact and vibration, and the antiresonance damper assembly 40 may additionally absorb impact and vibration.

Therefore, according to the present disclosure, the antiresonance damper assembly 40, which uses the turbine assembly 6 (and the turbine hub 36) as the mass body, may be used, together with the torsional damper assembly 20, to effectively attenuate impact and vibration in the rotation direction that occur when the lock-up clutch 14 operates. Therefore, it is possible to suppress resonance occurrence regions of the torque converter and vehicle powertrain.

Therefore, according to the torque converter for a vehicle according to the embodiment of the present disclosure configured as described above, the single antiresonance damper assembly 40 is applied, the turbine assembly 6 (and the turbine hub 36) is used as the mass body of the antiresonance damper assembly 40, and the inertia plate 49 is additionally applied to increase the overall inertia of the antiresonance damper assembly 40, thereby increasing the antiresonance damping effect and improving the vibration insulation performance.

In addition, according to the present disclosure, the overall inertia of the antiresonance damper assembly 40 may be increased without increasing the lengths of the torque converter in the axial direction and the radial direction, thereby making the antiresonance damper assembly 40 compact and optimizing the usage space.

In addition, according to the present disclosure, the turbine assembly 6 (and turbine hub 36) is connected to the antiresonance damper assembly 40 and used as the mass body, thereby improving the vibration insulation efficiency and the overall marketability of the torque converter.

In addition, according to the present disclosure, the damping effect of the antiresonance damper assembly 40 is increased, thereby improving the overall NVH performance of the vehicle and the power transmission performance of the torque converter.

The present invention has been described with reference to the limited exemplary embodiments and the drawings, but various modifications can be made without departing from the scope of the invention as defined in the accompanying claims.

## Claims

1. A torque converter for a vehicle, the torque converter comprising:
a front cover (2);
an impeller (4) coupled to the front cover (2) and configured to rotate together with the front cover (2);
a turbine assembly (6) disposed at a position facing the impeller (4);
a torsional damper assembly (20);
a lock-up clutch (14) configured to selectively and directly connect the front cover (2) and the torsional damper assembly (20);
a spline hub (34) connected to the torsional damper assembly (20) and configured to transmit driving power, which is transmitted to the torsional damper assembly (20), to a transmission,
wherein an antiresonance damper assembly (40) configured to absorb vibration and impact by using inertia of a mass body is coupled to the torsional damper assembly (20) and the turbine assembly (6),
wherein the turbine assembly (6) is coupled to a turbine hub (36) relatively rotatably connected to the spline hub (34),
wherein the antiresonance damper assembly (40) is connected to the turbine assembly (6) through the turbine hub (36) in order to use the turbine assembly (6) as the mass body,
wherein the antiresonance damper assembly (40) is disposed between the turbine assembly (6) and the torsional damper assembly (20),
wherein the antiresonance damper assembly (40) comprises an antiresonance damper plate (42), and the antiresonance damper plate (42) is coupled to the torsional damper assembly (20),
wherein the antiresonance damper assembly (40) further comprises:
a first inertia ring (44) disposed at a side of the turbine assembly (6), provided outside the antiresonance damper plate (42) in a radial direction, and configured to be rotatable relative to the antiresonance damper plate (42);
a second inertia ring (46) disposed at a side of the torsional damper assembly (20), provided outside the antiresonance damper plate (42) in the radial direction, and integrally and rotatably coupled to the first inertia ring (44) so as to be rotatable relative to the antiresonance damper plate (42);
one or more elastic members (48) provided in a circumferential direction on an outer peripheral surface of the antiresonance damper plate (42) and disposed in the first and second inertia rings (44, 46) integrally and rotatably coupled to each other, and
**characterized in that**
the first inertia ring (44) comprises a coupling portion (44a) extending inward in the radial direction so as to be fixedly coupled to one of or both the turbine assembly (6) and the turbine hub (36).

2. The torque converter of claim 1, wherein the turbine assembly (6) comprises a turbine plate (8) having an inner peripheral surface fixedly coupled to the turbine hub (36).

3. The torque converter of claim 1, wherein the torsional damper assembly (20) comprises:
a drive plate (22) integrally and rotatably coupled to the lock-up clutch (14);
a driven plate (28) integrally and rotatably coupled to the spline hub (34); and
an elastic structure disposed to elastically transmit driving power of the drive plate (22) to the driven plate (28).

4. The torque converter of claim 3, wherein the antiresonance damper plate (42) is integrally and rotatably coupled to the driven plate (28).

5. The torque converter of claim 3, wherein the torsional damper assembly (20) further comprises a cover plate (26) integrally and rotatably coupled to the drive plate (22), and the antiresonance damper plate (42) is integrally and rotatably coupled to the cover plate (26).

6. The torque converter of claim 3, wherein the elastic structure comprises:
one or more first springs (24) configured to receive driving power from the drive plate (22);
one or more second springs configured to transmit the driving power to the driven plate (28); and
an intermediate plate (32) disposed to receive the driving power from the one or more first springs (24) and transmit the driving power to the one or more second springs.

7. The torque converter of claim 6, wherein the antiresonance damper plate (42) is integrally and rotatably coupled to the driven plate (28).

8. The torque converter of claim 6, wherein the torsional damper assembly (20) further comprises a cover plate (26) integrally and rotatably coupled to the drive plate (22), and the antiresonance damper plate (42) is integrally and rotatably coupled to the cover plate (26).

9. The torque converter of claim 6, wherein the antiresonance damper plate (42) is integrally and rotatably coupled to the intermediate plate (32).

10. The torque converter of any one of claims 1 to 9, wherein one or more mounting portions are formed in an inner peripheral surface of the antiresonance damper plate (42) so that the antiresonance damper plate (42) is coupled to the torsional damper assembly (20).

## Patentansprüche

1. Drehmomentwandler für ein Fahrzeug, wobei der Drehmomentwandler umfasst:
eine vordere Abdeckung (2);
ein Laufrad (4), das mit der vorderen Abdeckung (2) gekoppelt ist und eingerichtet ist, um sich zusammen mit der vorderen Abdeckung (2) zu drehen;
eine Turbinenanordnung (6), die an einer Position dem Laufrad (4) zugewandt angeordnet ist;
eine Torsionsdämpferanordnung (20);
eine Sperrkupplung (14), die eingerichtet ist, um die vordere Abdeckung (2) und die Torsionsdämpferanordnung (20) selektiv und direkt zu verbinden;
eine Keilnabe (34), die mit der Torsionsdämpferanordnung (20) verbunden und eingerichtet ist, um Antriebsenergie, die auf die Torsionsdämpferanordnung (20) übertragen wird, auf ein Getriebe zu übertragen,
wobei eine Antiresonanz-Dämpferanordnung (40), die eingerichtet ist, um Schwingungen und Stöße unter Verwendung von Trägheit eines Massenkörpers zu absorbieren, mit der Torsionsdämpferanordnung (20) und der Turbinenanordnung (6) gekoppelt ist,
wobei die Turbinenanordnung (6) mit einer Turbinennabe (36) gekoppelt ist, die relativ drehbar mit der Keilnabe (34) verbunden ist,
wobei die Antiresonanz-Dämpferanordnung (40) über die Turbinennabe (36) mit der Turbinenanordnung (6) verbunden ist, um die Turbinenanordnung (6) als Massenkörper zu verwenden,
wobei die Antiresonanz-Dämpferanordnung (40) zwischen der Turbinenanordnung (6) und der Torsionsdämpferanordnung (20) angeordnet ist,
wobei die Antiresonanz-Dämpferanordnung (40) eine Antiresonanz-Dämpferplatte (42) umfasst und die Antiresonanz-Dämpferplatte (42) mit der Torsionsdämpferanordnung (20) gekoppelt ist,
wobei die Antiresonanz-Dämpferanordnung (40) ferner umfasst:
einen ersten Trägheitsring (44), der an einer Seite der Turbinenanordnung (6) angeordnet ist, außerhalb der Antiresonanz-Dämpferplatte (42) in einer radialen Richtung vorgesehen ist und relativ zu der Antiresonanz-Dämpferplatte (42) drehbar eingerichtet ist;
einen zweiten Trägheitsring (46), der an einer Seite der Torsionsdämpferanordnung (20) angeordnet ist, außerhalb der Antiresonanz-Dämpferplatte (42) in der radialen Richtung vorgesehen ist und integral und drehbar mit dem ersten Trägheitsring (44) gekoppelt ist, um relativ zu der Antiresonanz-Dämpferplatte (42) drehbar zu sein;
ein oder mehrere elastische Elemente (48), die in einer Umfangsrichtung auf einer äußeren Umfangsfläche der Antiresonanz-Dämpferplatte (42) vorgesehen sind und in dem ersten und dem zweiten Trägheitsring (44, 46) angeordnet sind, die integral und drehbar miteinander gekoppelt sind, und
**dadurch gekennzeichnet, dass**
der erste Trägheitsring (44) einen Kopplungsabschnitt (44a) umfasst, der sich in der radialen Richtung nach innen erstreckt, um fest mit einer oder mit beiden von der Turbinenanordnung (6) und der Turbinennabe (36) gekoppelt zu sein.

2. Drehmomentwandler nach Anspruch 1, wobei die Turbinenanordnung (6) eine Turbinenplatte (8) umfasst, deren innere Umfangsfläche fest mit der Turbinennabe (36) gekoppelt ist.

3. Drehmomentwandler nach Anspruch 1, wobei die Torsionsdämpferanordnung (20) umfasst:
eine Antriebsplatte (22), die integral und drehbar mit der Sperrkupplung (14) gekoppelt ist;
eine angetriebene Platte (28), die integral und drehbar mit der Keilnabe (34) gekoppelt ist; und
eine elastische Struktur, die angeordnet ist, um Antriebsenergie von der Antriebsplatte (22) elastisch auf die angetriebene Platte (28) zu übertragen.

4. Drehmomentwandler nach Anspruch 3, wobei die Antiresonanz-Dämpferplatte (42) integral und drehbar mit der angetriebenen Platte (28) gekoppelt ist.

5. Drehmomentwandler nach Anspruch 3, wobei die Torsionsdämpferanordnung (20) ferner eine Abdeckplatte (26) umfasst, die integral und drehbar mit der Antriebsplatte (22) gekoppelt ist, und die Antiresonanz-Dämpferplatte (42) integral und drehbar mit der Abdeckplatte (26) gekoppelt ist.

6. Drehmomentwandler nach Anspruch 3, wobei die elastische Struktur umfasst:
eine oder mehrere erste Federn (24), die eingerichtet sind, um Antriebsenergie von der Antriebsplatte (22) aufzunehmen;
eine oder mehrere zweite Federn, die eingerichtet sind, um die Antriebsenergie auf die angetriebene Platte (28) zu übertragen; und
eine Zwischenplatte (32), die angeordnet ist, um die Antriebsenergie von der einen oder den mehreren ersten Federn (24) aufzunehmen und die Antriebsenergie auf die eine oder die mehreren zweiten Federn zu übertragen.

7. Drehmomentwandler nach Anspruch 6, wobei die Antiresonanz-Dämpferplatte (42) integral und drehbar mit der angetriebenen Platte (28) gekoppelt ist.

8. Drehmomentwandler nach Anspruch 6, wobei die Torsionsdämpferanordnung (20) ferner eine Abdeckplatte (26) umfasst, die integral und drehbar mit der Antriebsplatte (22) gekoppelt ist, und die Antiresonanz-Dämpferplatte (42) integral und drehbar mit der Abdeckplatte (26) gekoppelt ist.

9. Drehmomentwandler nach Anspruch 6, wobei die Antiresonanz-Dämpferplatte (42) integral und drehbar mit der Zwischenplatte (32) gekoppelt ist.

10. Drehmomentwandler nach einem der Ansprüche 1 bis 9, wobei ein oder mehrere Montageabschnitte in einer inneren Umfangsfläche der Antiresonanz-Dämpferplatte (42) gebildet sind, so dass die Antiresonanz-Dämpferplatte (42) mit der Torsionsdämpferanordnung (20) gekoppelt ist.

## Revendications

1. Convertisseur de couple pour un véhicule, le convertisseur de couple comprenant :
un couvercle avant (2) ;
un impulseur (4) couplé au couvercle avant (2) et configuré pour tourner avec le couvercle avant (2) ;
un ensemble turbine (6) disposé dans une position faisant face à l'impulseur (4) ;
un ensemble amortisseur de torsion (20) ;
un embrayage de verrouillage (14) configuré pour relier de manière sélective et directe le couvercle avant (2) et l'ensemble amortisseur de torsion (20) ;
un moyeu cannelé (34) relié à l'ensemble amortisseur de torsion (20) et configuré pour transmettre la puissance d'entraînement, qui est transmise à l'ensemble amortisseur de torsion (20), à une transmission,
dans lequel un ensemble amortisseur antirésonance (40) configuré pour absorber des vibrations et des chocs en utilisant l'inertie d'un corps massique est couplé à l'ensemble amortisseur de torsion (20) et à l'ensemble turbine (6),
dans lequel l'ensemble turbine (6) est couplé à un moyeu de turbine (36) relié de manière rotative par rapport au moyeu cannelé (34),
dans lequel l'ensemble amortisseur antirésonance (40) est relié à l'ensemble turbine (6) par l'intermédiaire du moyeu de turbine (36) afin d'utiliser l'ensemble turbine (6) comme corps massique,
dans lequel l'ensemble amortisseur antirésonance (40) est disposé entre l'ensemble turbine (6) et l'ensemble amortisseur de torsion (20),
dans lequel l'ensemble amortisseur antirésonance (40) comprend une plaque d'amortisseur antirésonance (42), et la plaque d'amortisseur antirésonance (42) est couplée à l'ensemble amortisseur de torsion (20),
dans lequel l'ensemble amortisseur antirésonance (40) comprend en outre :
une première bague d'inertie (44) disposée sur un côté de l'ensemble turbine (6), prévue à l'extérieur de la plaque d'amortisseur antirésonance (42) dans une direction radiale, et configurée pour pouvoir tourner par rapport à la plaque d'amortisseur antirésonance (42) ;
une seconde bague d'inertie (46) disposée sur un côté de l'ensemble amortisseur de torsion (20), prévue à l'extérieur de la plaque d'amortisseur antirésonance (42) dans la direction radiale, et couplée de manière intégrale et rotative à la première bague d'inertie (44) de manière à pouvoir tourner par rapport à la plaque d'amortisseur antirésonance (42) ;
un ou plusieurs éléments élastiques (48) prévus dans une direction circonférentielle sur une surface périphérique extérieure de la plaque d'amortisseur antirésonance (42) et disposés dans les première et seconde bagues d'inertie (44, 46) couplées de manière intégrale et rotative l'une à l'autre, et
**caractérisé en ce que**
la première bague d'inertie (44) comprend une partie d'accouplement (44a) s'étendant vers l'intérieur dans la direction radiale de manière à être couplée de manière solidaire à l'un ou aux deux de l'ensemble turbine (6) et du moyeu de turbine (36).

2. Convertisseur de couple selon la revendication 1, dans lequel l'ensemble turbine (6) comprend une plaque de turbine (8) ayant une surface périphérique intérieure couplée de manière solidaire au moyeu de turbine (36).

3. Convertisseur de couple selon la revendication 1, dans lequel l'ensemble amortisseur de torsion (20) comprend :
une plaque d'entraînement (22) couplée de manière intégrale et rotative à l'embrayage de verrouillage (14) ;
une plaque entraînée (28) couplée de manière intégrale et rotative au moyeu cannelé (34) ; et
une structure élastique disposée de manière à transmettre de manière élastique la puissance d'entraînement de la plaque d'entraînement (22) à la plaque entraînée (28).

4. Convertisseur de couple selon la revendication 3, dans lequel la plaque d'amortisseur antirésonance (42) est couplée de manière intégrale et rotative à la plaque entraînée (28).

5. Convertisseur de couple selon la revendication 3, dans lequel l'ensemble amortisseur de torsion (20) comprend en outre une plaque de recouvrement (26) couplée de manière intégrale et rotative à la plaque d'entraînement (22), et la plaque d'amortissement antirésonance (42) est couplée de manière intégrale et rotative à la plaque de recouvrement (26).

6. Convertisseur de couple selon la revendication 3, dans lequel la structure élastique comprend :
un ou plusieurs premiers ressorts (24) configurés pour recevoir la puissance d'entraînement de la plaque d'entraînement (22) ;
un ou plusieurs seconds ressorts configurés pour transmettre la puissance d'entraînement à la plaque entraînée (28) ; et
une plaque intermédiaire (32) disposée de manière à recevoir la puissance d'entraînement desdits un ou plusieurs premiers ressorts (24) et transmettre la puissance d'entraînement auxdits un ou plusieurs seconds ressorts.

7. Convertisseur de couple selon la revendication 6, dans lequel la plaque d'amortisseur antirésonance (42) est couplée de manière intégrale et rotative à la plaque entraînée (28).

8. Convertisseur de couple selon la revendication 6, dans lequel l'ensemble amortisseur de torsion (20) comprend en outre une plaque de recouvrement (26) couplée de manière intégrale et rotative à la plaque d'entraînement (22), et la plaque d'amortissement antirésonance (42) est couplée de manière intégrale et rotative à la plaque de recouvrement (26).

9. Convertisseur de couple selon la revendication 6, dans lequel la plaque d'amortisseur antirésonance (42) est couplée de manière intégrale et rotative à la plaque intermédiaire (32).

10. Convertisseur de couple selon l'une quelconque des revendications 1 à 9, dans lequel une ou plusieurs parties de montage sont formées dans une surface périphérique intérieure de la plaque d'amortisseur antirésonance (42) de sorte que la plaque d'amortisseur antirésonance (42) est couplée à l'ensemble d'amortisseur de torsion (20).
